# EUROPEAN PATENT APPLICATION

(11) **EP 1 482 717 A1**
(43) Date of publication of application: **01.12.2004**
(21) Application number: 04102267.4
(22) Date of filing: 24.05.2004
(51) Int. Cl.: H04M 1/725, H04Q 7/22

(54) **Generating messages on a mobile terminal using templates**

(30) Priority: 30.05.2003 US 474983 P; 28.07.2003 US 490794 P; 06.04.2004 US 819467
(71) Applicant: Openwave Systems Inc., Redwood City, CA 94063 (US)
(72) Inventor: Wugofski, Theodore D., Fort Worth, Texas 76109 (US)
(74) Representative: Asquith, Julian Peter

(57) **Abstract**

In one embodiment a method for enabling composition of a multimedia (MM) message on a mobile terminal (MT) is provided. The method comprises creating a message template for the MM message; provisioning the MT with the template; and provisioning a messaging user agent (UA) for the MT with logic to allow a user to compose the MM message based on the template.

## Description

### FIELD OF THE INVENTION

This invention relates to mobile communications. In particular, the invention relates to the creation of messages using a mobile terminal.

### BACKGROUND

Mobile terminals such as mobile telephones, Personal Digital Assistants (PDAs), pocket PC's, two-way pagers, etc. may be used to send messages. The messages may be Short Message Service (SMS) messages and may include simple text. Alternatively, the messages may be multimedia (MM) messages that use a Multimedia Messaging Service (MMS). MM messages include multimedia elements, such as graphics, video, animation, text, audio, etc.

MM messages may be composed into a time-based presentation, for example, a song may play while different pictures are displayed for a few seconds. Authoring such a multimedia message/presentation is beyond the skill of most consumers. Thus, there is a need to simplify the authoring of such multimedia messages.

### SUMMARY OF THE INVENTION

In one embodiment, the invention provides a method for enabling composition of multimedia (MM) messages on a mobile terminal (MT). In the method, a message template is created for the MM message. Thereafter, the MT is provisioned with the message template. The method also includes provisioning a messaging user agent (UA) for the MT with logic to allow a user to compose the MM message based on the template.

### BRIEF DESCRIPTION OF THE DRAWINGS

Figure 1 shows a high-level block diagram of a network of architecture within which embodiments of the invention may be practiced;

Figure 2 shows the functional elements within the messaging user agent, in accordance with one embodiment of the invention;

Figure 3 shows the components within a messaging controller, in accordance with one embodiment of the invention;

Figure 4 shows how the message may be composed using a data entry form, in accordance with one embodiment of the invention;

Figure 5 shows how a message may be composed using a message composition template, in accordance with one embodiment of the invention.

Figures 6 to 8 illustrate examples of template distribution models, in accordance with embodiments of the present invention; and

Figure 9 shows an example of hardware that may be used to implement a mobile terminal in accordance with one embodiment of the invention.

### DETAILED DESCRIPTION

The techniques disclosed herein relate to the authoring of multimedia (MM) messages on a mobile terminal (MT) such as a mobile telephone. As noted above, the authoring of MM messages is a complex task which is beyond the skill of most MT users. Advantageously, according to the techniques disclosed herein, this complex task is simplified through the creation and distribution of message composition templates that embody components to prompt a user to enter or select message data, e.g., text elements, picture elements, sound elements, etc., to be associated with an MM message, and components that automatically control composition of the MM message based on the message data. Thus, one advantage of the techniques disclosed herein is that it enables most, if not all, MT users to compose complex MM messages.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

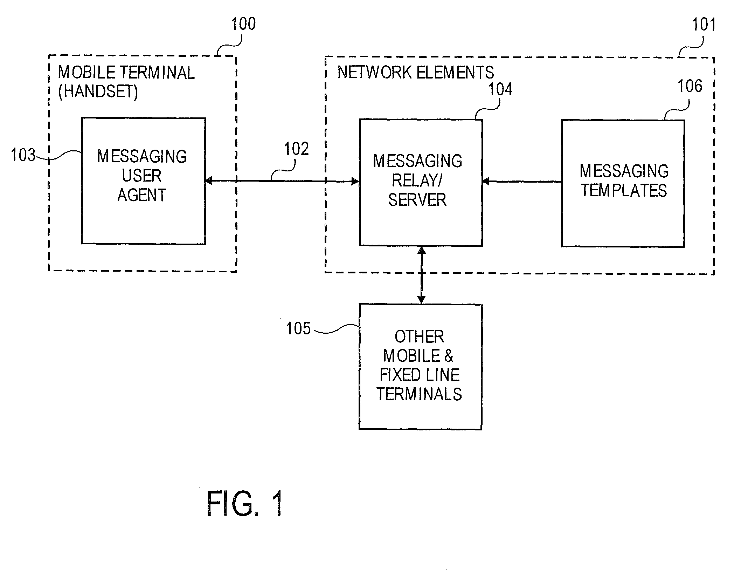

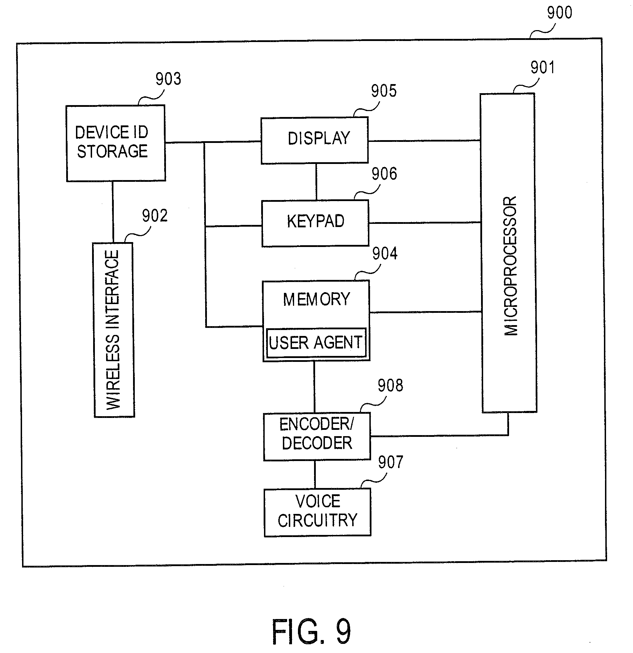

Figure 1 shows a mobile terminal 100 and a collection of network elements 101 to provide messaging functions that enable a messaging user agent 103 of the mobile terminal 100 to use stored and downloadable templates to ease the creation of multimedia messages, in accordance with one embodiment of the invention. The mobile terminal 100, which may be a mobile telephone, Personal Digital Assistant (PDA), pocket PC, two-way pager, etc., interfaces with the network elements 101 using a defined protocol 102. In one embodiment, the Third Generation 3GPP 23.140 specification defines this protocol, but other messaging protocols, such as the Internet Engineering Task Force Request for Consent IETF RFC 2822, may be used. The mobile terminal 100 supports a messaging user agent 103 that provides functionality for receiving, sending, creating, storing, managing, and deleting multimedia messages. Figure 9 shows an example of hardware that may be used to implement the mobile terminal 100 in accordance with one embodiment.

The network elements 101 provide a messaging relay/server 104 for managing multimedia messages sent and received by mobile terminals and fixed terminals 105, as well as managing downloadable messaging templates 106.

Multimedia messages are messages that include multimedia elements (graphics, video, animations, text, and audio being some examples) that can be composed into a timeline-based presentation (i.e., one song may play while different pictures are displayed for a few seconds and then upon displaying the last picture, a different song is played). The complexity of authoring a multimedia presentation is beyond the skill of most consumers and given the flexibility of multimedia presentation languages (such as the World Wide Web Consortium's Synchronized Multimedia Language), not readily simplified without a significant loss of flexibility.

Thus, in one embodiment, a technique for simplifying the authoring of multimedia messages based on templates is disclosed herein. Given the limited memory resources of mobile terminals, advantageously in one embodiment, the download of these templates to the mobile terminal 100 is supported.

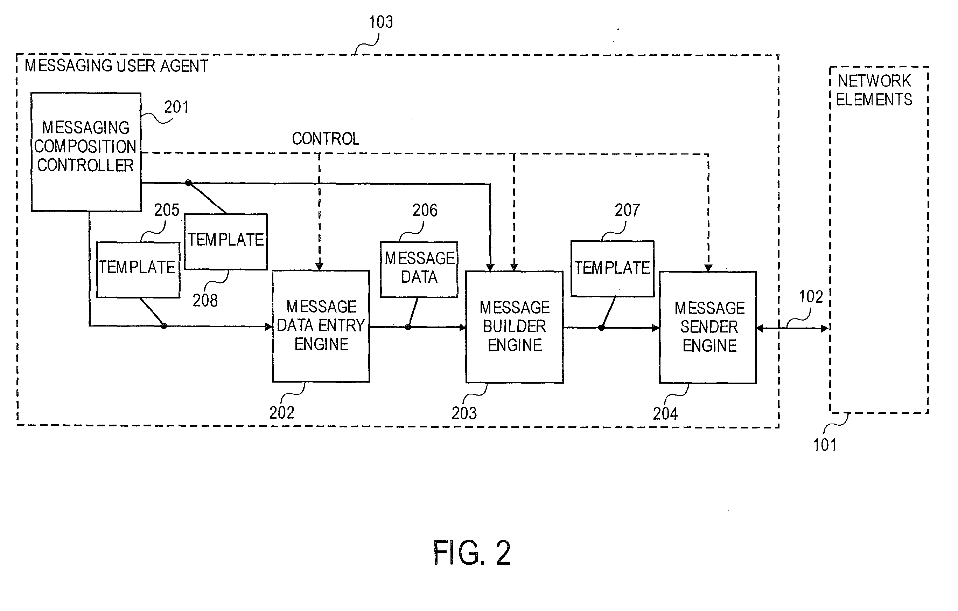

Referring to Figure 2 of the drawings, in one embodiment, the messaging user agent 103 includes four engines viz. a message composition controller engine 200, a message data entry engine 202, a message builder engine 203, and a message sender engine 204. The message composition controller 201 manages the flow of information and control between the message data entry engine 202, the message builder engine 203, and the message sender engine 204. The message data entry engine 202 interacts with the end-user to capture message data 206 necessary for creating a multimedia message. This interaction is defined by an interaction template 205 either provided by or specified by the message composition controller 201. The message data 206 may be data that already exists on the mobile terminal (such as existing photos or audio files), data that exists in a network (such as a images in a network based photo album), or data that needs to be created at run-time (such as a picture taken by the user or newly entered text). The message builder engine 203 takes the message data 206 collected by the message data entry engine 202 and formats the data into a desired multimedia message 207. The message 207 construction is defined by a composition template 208 either provided by or specified by the message composition controller 201. The message sender engine 204 takes the multimedia message 207 and send the message to the network elements 101 over the interface 102.

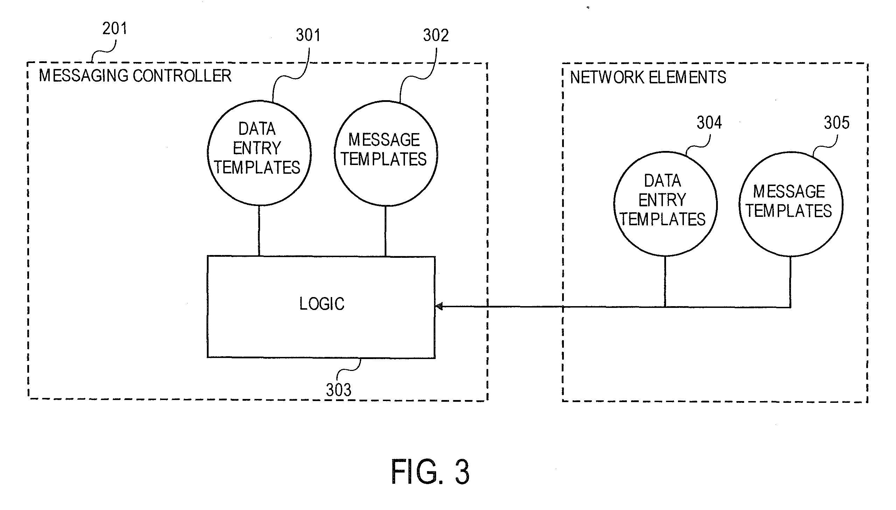

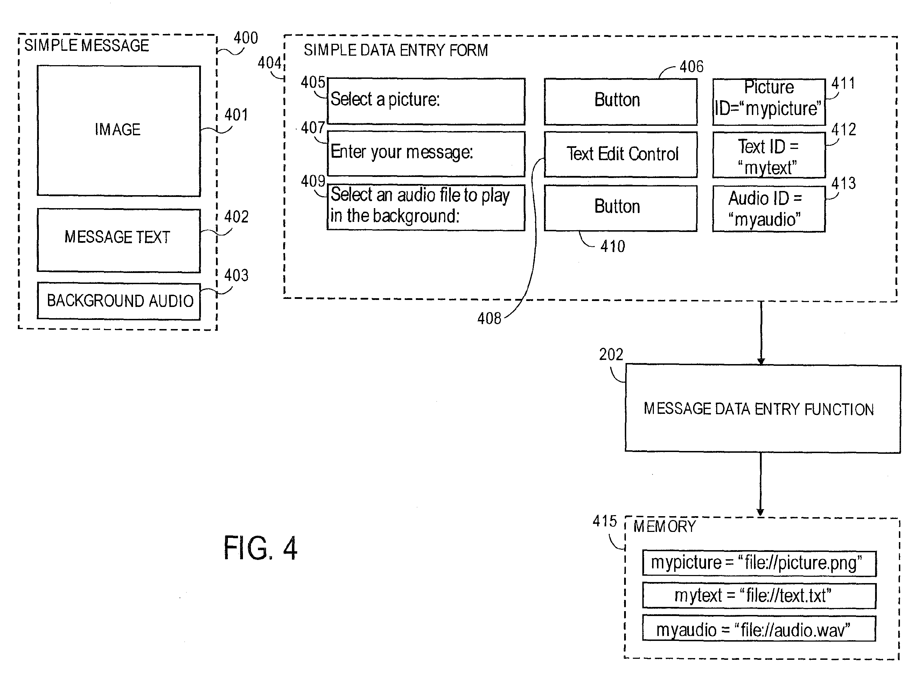

Referring to Figure 3, it will be seen that in one embodiment, the message composition controller 201 includes a set of data entry templates 301 and message composition templates 302. The message composition controller 201 also includes logic 303 for finding and accessing data entry templates 304 and message composition templates 305 that are located remotely as a network resource. These network based templates may be downloaded and stored on the mobile terminal 100 for use even when the network is not available, or they may be accessed and used only when the mobile terminal is connected to the network. In one embodiment, a data entry template defines a form containing a collection of fields that the user must navigate through and enter the appropriate data. For example, consider a simple multimedia message 400 as shown in Figure 4 of the drawings. The message 401 includes three elements, viz. an image 401, message text 402 and a background audio track 403. The corresponding simple data entry template 404 shown in Figure 4 provides all of the end-user prompts for these three elements, viz. a prompt 405 and button 406 for selecting an image, a prompt 407 and text edit control mechanism 408 for entering the message text, and a prompt 409 and button 410 for selecting a background audio file. In addition, the simple data entry form 404 specifies where the values for these three elements should be stored: the picture is stored in the location specified by a picture identifier (ID) 411, the message text is stored in the location specified by a text ID 412, and the audio file is stored in the location specified by an audio ID 413. The message data entry function 202 displays an appropriate user interface to the user, collects the data, and then stores the data into the memory locations 415 specified by the simple data entry template 404. For more complex messages, multiple data entry templates may be used to gather the needed data to construct the multimedia message.

In one embodiment, the Extensible Hypertext Markup Language (XHTML) may be used as the language for programming the data entry templates. If multiple templates are required, hyperlinks between templates may be used.

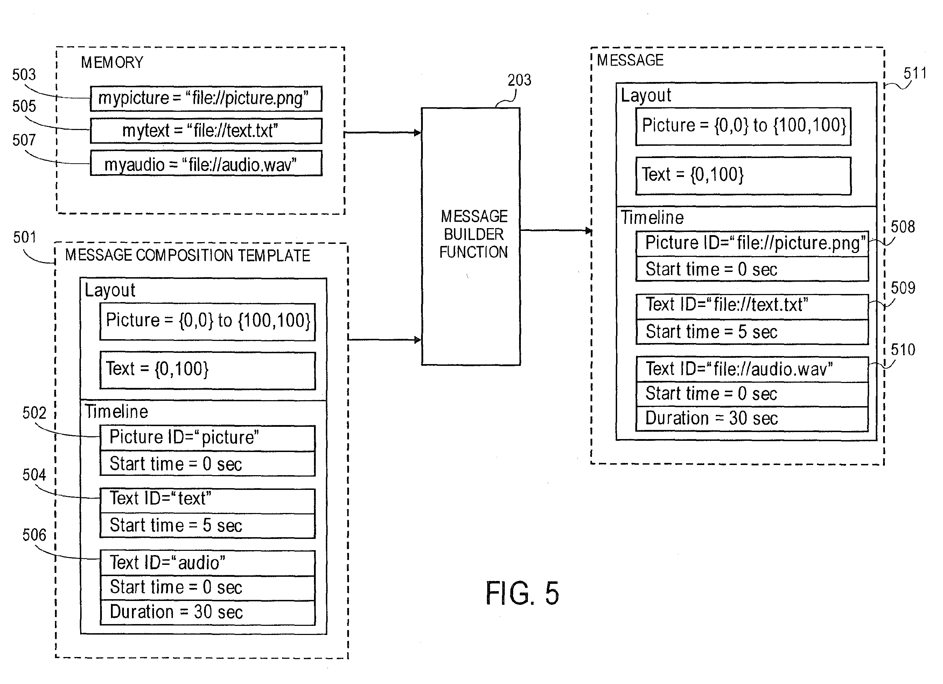

As will be seen from Figure 5 of the drawings, in one embodiment, the message builder function 203 uses a message composition template 501 to build the multimedia message 502. The message composition template 501 is essentially a completed message with some of the fields referring to the locations specified by the message data entry template. For example, in the message composition template 501, a picture ID 502 refers to the "mypicture" location in a memory 503. Similarly, a text ID 504 refers to the "mytext" location in a memory 505 and a audio ID 506 refers to the "myaudio" location in a memory 507. When the message builder function 203 processes the message composition template 501, it replaces these memory references in the message composition template 501 with the actual values found in memory. For example, the picture ID value is replaced with a file://picture.png value 508, the text ID value is replaced with a file://text.txt value 509, and the audio ID value is replaced with a file://audio.wav value 510. The resulting message 511 is then processed by the message sender function for transmission to the network.

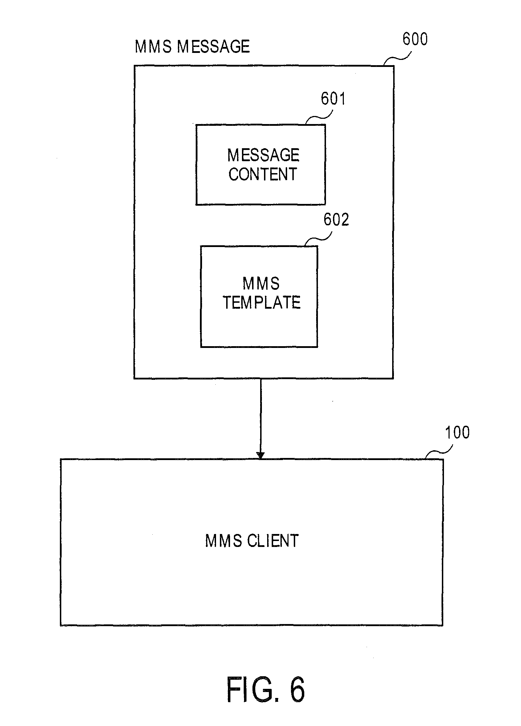

In one embodiment, the mobile terminal 100 may be provisioned with a messaging template, as described, using a distribution model known as "simple distribution." With simple distribution, the messaging templates are distributed as part of MM messages. For example, Figure 6 of the drawings shows an MM message 600 which includes message content 601, and a messaging template 602 embodied within the message 600, in accordance with the simple distribution model.

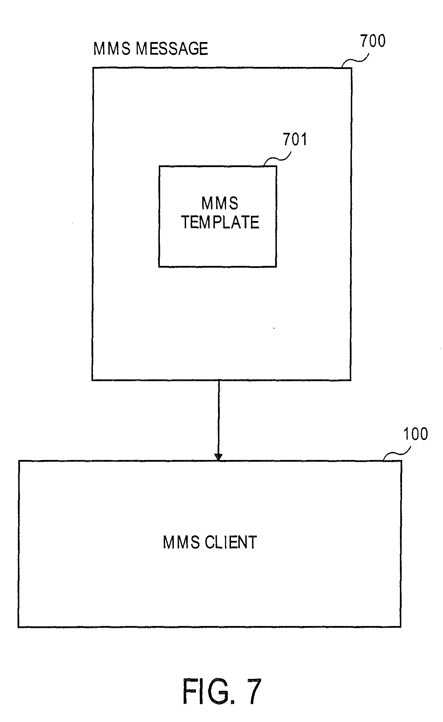

In another embodiment, the messaging templates may be distributed, in accordance with the techniques of the present invention, using a model known as "independent distribution." With independent distribution, as the name implies, the messaging templates are distributed independently of MM messages. Figure 7 of the drawings shows an MM message 700 which follows the independent distribution model. As will be seen, the MM message 700 includes the only a composition template 701 and no other content. Thus, the composition template 701 is being distributed independently of any content.

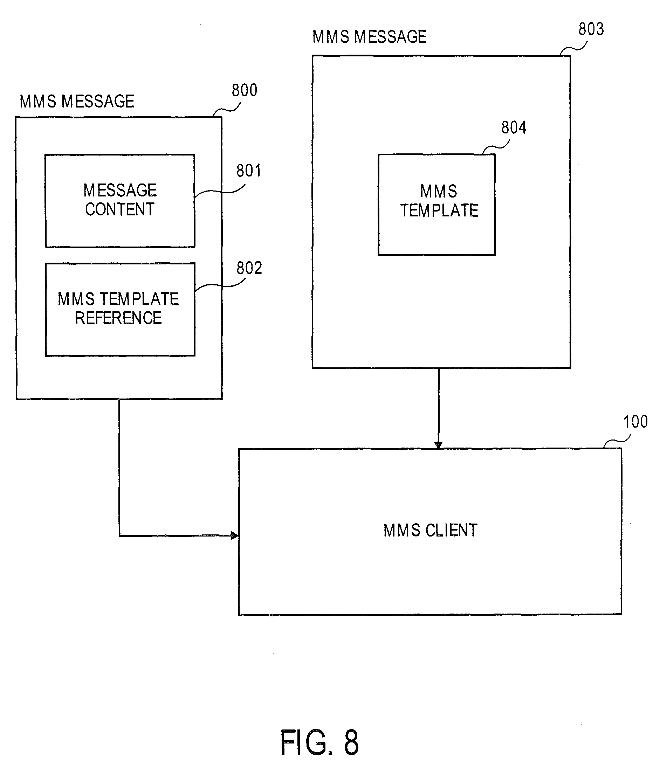

In yet another embodiment, it is possible to distribute the composition templates of the present invention using a distribution model known as "super distribution." With the super distribution model, the templates are referenced by MM messages, but are distributed separately. Figure 8 of the drawings illustrates how composition templates may be distributed by super distribution. Referring to Figure 8, reference numeral 800 indicates an MM message that includes message content 801, and a template reference 802. In use, the MM message 800 is received by the user agent 103 of the mobile terminal 100, which then uses the template reference 802 to download the actual message in template 804 referred to by the template reference 802. As will be seen, the template 804 is downloaded as part of a separate MM message 803. For super distribution, the user agent 103 of the mobile terminal 100 is configured automatically download the template by sending a request, e.g., an MMS request or an HTTP request to a network address referred to in the template reference, at which the actual template is stored. The actual template may be delivered to the mobile telephone using MMS or HTTP.

Referring to Figure 9 of the drawings, an example of hardware 900 that may be used to implement the mobile terminal 100, in accordance with one embodiment, is show schematically. The hardware 900 includes a processor 901 which may be or include any of: a general-or-special purpose programmable microprocessor, Digital Signal Processor (DSP), Application Specific Integrated Circuits (ASIC), Programmable Logic Array (PLA), Field Programmable Gate Array (FBGA), etc., or a combination thereof. The hardware 900 includes a wireless interface 902 that couples to a carrier network to receive incoming and outgoing signals. Device identifier (ID) storage 903 stores and supplies to the wireless interface 902 a device ID which identifies hardware 900 to outside entities (e.g. a network element 101).

In addition, the hardware 900 includes a memory 904 that stores data and/or software for performing many of the processing tasks performed by the hardware 900 when executed by the processor 901. The software includes the user agent 105, described above. The memory 904 may represent one or more physical memory devices, which may include any type of Random Access Memory (RAM), Read-Only Memory (ROM), (which may be programmable), flash memory, non-volatile mass storage device or a combination of such memory devices. The memory 904 is coupled to the wireless interface 902 for the establishment of the communications sessions with outside entities above. The hardware 900 further includes a display 905, a keypad 906, voice circuitry 907 for inputting and outputting audio, and an encoder/decoder 908 coupled between processor 901 and voice circuitry 907 for encoding and decoding audio signals.

In general, the routines executed to implement the embodiments of the invention, may be implemented as part of an operating system or a specific application, component, program, object, module or sequence of instructions referred to as "computer programs." The computer programs typically comprise one or more instructions set at various times in various memory and storage devices in a computer, and that, when read and executed by one or more processors in a computer, cause the computer to perform operations necessary to execute elements involving the various aspects of the invention. Moreover, while the invention has been described in the context of fully functioning computers and computer systems, those skilled in the art will appreciate that the various embodiments of the invention are capable of being distributed as a program product in a variety of forms, and that the invention applies equally regardless of the particular type of machine or computer-readable media used to actually effect the distribution. Examples of computer-readable media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Although the present invention has been described with reference to specific exemplary embodiments, it will be evident that the various modifications and changes can be made to these embodiments without departing from the broader spirit of the invention. Accordingly, the specification and drawings are to be regarded in an illustrative sense rather than in a restrictive sense.

## Claims

1. A method for enabling composition of a multimedia (MM) message on a mobile terminal (MT), the method comprising:
creating a message template for the MM message;
provisioning the MT with the template; and
provisioning a messaging user agent (UA) for the MT with logic to allow a user to compose the MM message based on the template.

2. The method of claim 1, further comprising creating a plurality of templates for the MM message, provisioning the MT with the plurality of templates; and allowing the user to select one of the plurality of templates for the composition of the MM message.

3. The method of claim 1, wherein provisioning the MT with the template comprises sending the template to the MT together with an MM message that includes content on which the template is based.

4. The method of claim 1, wherein provisioning the MT with the template comprises sending the template in an MM message consisting of the template and no other content.

5. The method of claim 1, wherein provisioning the MT with the template comprises sending a reference to the template in an MMS message so that the messaging UA can use the reference to separately download the template.

6. A method for operating a mobile terminal (MT) to compose a multimedia (MM) message, the method comprising:
receiving at least one template to facilitate the composition of the MM message;
generating a user interface (UI) based on the template to prompt a user to provide a user selection for each variable element of the template;
receiving the user selection; and
composing an MM message based on the template and the user selection.

7. The method of claim 6, further comprising storing at least one template in a memory of the MT for further use.

8. The method of claim 6, wherein each message template comprises a data entry template that defines a form that can be displayed through the UI, the form comprising a plurality of fields for data input from user.

9. The method of claim 8, wherein each message template comprises a composition template to build the MM message based on the fields of the data entry template.

10. A mobile terminal, comprising:
a processor; and
a memory coupled to the processor, the memory storing instructions which when executed by the processor, cause the MT to perform a method comprising:
receiving at least one template to facilitate the composition of the MM message;
generating a user interface (UI) based on the template to prompt a user to provide a user selection for each variable element of the template;
receiving the user selection; and
composing an MM message based on the template and the user selection.

11. The mobile terminal of claim 6, wherein the method further comprises storing at least one template in a memory of the MT for further use.

12. The mobile terminal of claim 10, wherein each message template comprises a data entry template that defines a form that can be displayed through the UI, the form comprising a plurality of fields for data input from user.

13. The mobile terminal of claim 12, wherein each message template comprises a composition template to build the MM message based on the fields of the data entry template.

14. A computer readable medium, having stored thereon a sequence of instructions which when executed by a processor, cause the processor to perform a method comprising:
receiving at least one template to facilitate the composition of the MM message;
generating a user interface (UI) based on the template to prompt a user to provide a user selection for each variable element of the template;
receiving the user selection; and
composing an MM message based on the template and the user selection.

15. The computer readable medium of claim 14, wherein the method further comprises storing at least one template in a memory of the MT for further use.

16. The computer readable medium of claim 14, wherein each message template comprises a data entry template that defines a form that can be displayed through the UI, the form comprising a plurality of fields for data input from user.

17. The computer readable medium of claim 16, wherein each message template comprises a composition template to build the MM message based on the fields of the data entry template.

18. A mobile terminal (MT), comprising:
a message data entry engine to prompt a user to enter data elements associated with a multimedia (MM) message to be composed;
a message composition template to define a presentation relationship between the data elements;
a message builder function to build the MM message based on the template and the data elements; and
a message composition controller to control operation of the message data entry engine, the message builder function, and the message composition template.
